# EUROPEAN PATENT SPECIFICATION

(11) **EP 2 547 499 B1**
(45) Date of publication and mention of the grant of the patent: **14.01.2015**
(21) Application number: 10710536.3
(22) Date of filing: 19.03.2010
(51) Int. Cl.: B29C 33/02, B29C 33/04, B29C 33/30

(54) **A HEATED MOULD AND USE OF SAID MOULD FOR FORMING FIBRE REINFORCED COMPOSITES**
BEHEIZTE GUSSFORM UND VERWENDUNG DIESER GUSSFORM ZUR HERSTELLUNG VON FASERVERSTÄRKTEN VERBUNDSTOFFEN
MOULE CHAUFFÉ ET UTILISATION DUDIT MOULE POUR FORMER DES COMPOSITES RENFORCÉS PAR DES FIBRES

(43) Date of publication of application: 23.01.2013
(73) Proprietor: SSP Technology A/S, 5771 Stenstrup (DK)
(72) Inventor: SØRENSEN, Flemming, DK-5700 Svendborg (DK)
(74) Representative: Nielsen, Kim Garsdal
(86) International application number: PCT/DK2010/000035
(87) International publication number: WO 2011/113432

(56) References cited:
- WO-A1-00/38905
- WO-A1-2009/025226
- JP-U- 59 064 218

## Description

The present invention relates to a mould and a method for forming fibre reinforced composites, which has to be heated as part of the forming process. Such moulds and methods are used for example for the forming of rotor blades for wind turbines and sub-components therefore, but may also be used for forming boat hulls, vehicle bodies, various sorts of tanks and containers etc.

The type of mould previously used by the applicant for this purpose is made as a sandwich structure with a core of an aluminium honeycomb structure between shells of fibre glass. The honeycomb structure is arranged with its elongate cells extending substantially perpendicularly to the active mould surface, which is in contact with the composite, and the cell walls are provided with openings allowing heating and cooling fluids to pass between cells. When, during the forming process, the mould needs to be heated, a hot fluid is caused to pass through the core substantially in plane with the active surface of the mould. The thermal conductivity of the material of the honeycomb structure contributes to a relatively uniform temperature on the mould surface. Similarly, when the mould needs to be cooled, a cold fluid is caused to pass through the cell structure.

This method provides for a very efficient heating, but the equipment needed for heating and distributing the fluid is rather complex. In addition, the need for heating is not always the same at all locations of the mould and a lot of energy is wasted heating areas of the mould, where it does no good.

Other examples of prior art moulds are known from WO00/38905 and WO2005/095091. These moulds are heated by means of heating wires embedded in the mould directly below the active mould surface.

The use of heating wires provides for a very energy efficient heating of the mould, but poses other problems. When the wires are arranged as shown in WO2005/095091, the heat will be applied irregularly with a temperature maximum directly above each wire, potentially causing imperfections in the composite. On the other hand, when the heating wires are arranged relatively close to one another as shown in WO00/38905 the mould becomes relatively complex and thus both expensive and delicate.

Document JP 59 064218 U discloses a mould for forming fibre reinforced composites, comprising an active surface intended to be in contact with the composite, and a core member comprising a cell structure,characterized in that it further comprises one or more conduit(s) embedded in the core member forming a path through the cell structure.

It is therefore an object of the invention to provide a mould, which may be heated in an energy and cost efficient way while at the same time providing a uniform temperature distribution on the active mould surface.

This object is achieved with a mould, comprising an active surface intended to be in contact with the composite, a core member comprising a cell structure, one or more conduit(s) in the core member forming a path through the cell structure, and one or more heating wire(s) arranged in said conduit(s).

The conduit(s) serve as a support for the relatively fragile heating wires and thus allow them to be arranged within the cell structure. This leads to a more direct heating in comparison with the fluid based system previously used in cell structure moulds. At the same time the cell structure, as well as the conduit(s), contributes to the transmission and distribution of the heat generated by the heating wires, thereby maintaining the advantages of the uniform temperature distribution known from the fluid based systems.

In the preferred embodiment the conduit(s) comprise(s) tubing made from tubes and/or pipes, which has the very important advantage that heating wires may easily be replaced if broken or worn, or if different characteristics are needed, the wire simply being pulled trough the tubing. This leads to a considerably increased lifetime of the mould, minimises the downtime when repairs are needed, and allows reuse of moulds for new purposes.

It is, however, to be understood that similar advantages may also be achieved by using a wire with a sleeving, which will then serve as the conduit. Such a sleeving, which may for example be made from braided metal, should provide the wire with sufficient abrasion resistance to allow it to be pulled through a passage in the cell structure and at the same time prevent the shear fractures, which could otherwise be the consequence of the wire being supported discontinuously on spaced apart cell walls.

The cell structure is preferably a honeycomb structure, which combines an excellent load bearing capacity with a low own weight, but other structures such as open-celled foams or lattices may also be employed, and the term "cell structure" should be understood in its broadest sense. Moreover, the cell structure should preferably be formable to allow the formation of moulds having curved surfaces.

It is preferred that the cell structure is made from a material with a thermal conductivity of at least 10 W/(m·K), preferably at least 100 W/(m·K). At present, aluminium is preferred, but other materials such as steel, polymers, ceramics or composites may also be used as long as they are sufficiently strong and temperature resistant and have a thermal conductivity which allows for an efficient heat distribution.

As in the prior art process, the mould and composite formed may be allowed to cool naturally once the heating step has been completed, but in some instances an active cooling is necessary. For this purpose the mould is preferably provided with a fluid inlet, a fluid outlet and a fluid passage between them, the fluid passage comprising openings in at least some of the cell walls of the cell structure. The fluid is forced through the cell structure using a ventilator or pump or by applying a pressurized fluid, all depending on the fluid and cell structure used. In this, the term "opening" should be understood in its broadest sense, including also the passages between cells in an open-celled foam and the spaces between bars in a lattice.

It is of course also possible to provide a combined heating, where a hot fluid is passed through the cell structure as described for the cooling fluid above, simultaneously with the use of the heating wires. This will give an even more uniform temperature distribution and the fluid passing the conduits containing the heating wires may contribute to the transmission of heat to the mould surface.

As the conduit(s) and thus also the heating wires may be arranged almost freely within the mould, a more targeted application of the heat may be achieved in comparison with what is known from the fluid based systems. In this way the mould may be divided into two or more heating zones with different configuration of the heating wires and/or separate controlling of the heating wires. The different configurations of heating wires include the use of different wire types, different wire density and different wire path patterns.

In addition, the mould may be provided with heating wires only in some zones, while the entire mould is heated by means of a heating fluid, the heating wires thus serving to provide extra heat in the zones where it is needed. This may for example be the case when forming rotor blades for wind turbines, which, in use, are subject to heavy loads and are therefore characterized in having relatively large variations in material thickness. Also, rotor blades are usually assembled from two shell parts forming the outer aerodynamic surface of the blade and a load bearing structure arranged between them. When interconnecting these parts it is customary to use a type of glue, which requires heating, and it may therefore be advantageous to be able to heat only those sections of the mould, where the glued joints are located.

As regards the controlling of the heating, different voltages or currents may be applied on the wires in different zones or the power for different zones may be switched on and off at different times. This choice, of course, depends on the power sources available, but at present it is preferred to operate with a constant voltage.

Also, as for the prior art mould previously used by the applicant, the mould may be designed to allow heating and cooling fluids to be applied differently in different zones, but this requires a mould design and fluid supply system, which is usually to complex to be feasible.

In a preferred embodiment, the heating wires are arranged at the centre of the core member, substantially half way between the active surface and the opposite surface of the mould. This has two major advantages, one being that the heating wires are kept at a distance from the active mould surface, further contributing to an even temperature distribution, the other that the mould itself it heated uniformly. The uniform heating prevents the distortion caused by thermal expansion, which has been known to occur in moulds of the types described in the WO publications mentioned above. For the same reason, it is preferred that the mould is substantially symmetrical with a surface layer at the bottom corresponding substantially to the one used on the active surface.

The precise design of the mould, and particularly the heating capacity of the heating wires, will depend on its intended use, not least on the type of composite to be formed. Most such composites are bound by means of a resin, which may be either thermoplastic or thermosetting. In both cases the heating of the mould is intended to bring the composite into a state where it has assumed its intended shape and where the fibrous material is wet through with resin.

When using a thermosetting resin this intended state to be reached by the heating is where the resin has penetrated into the fibrous material and has hardened.

When using a thermoplastic resin, it may be provided as a separate layer in the composite lay-up, which melts and penetrates into the fibrous material when heated. It is, however, also possible to use prepregs, where the fibrous material has already been saturated wholly or partially with resin. In these cases the heating softens the resin and makes the pre-preg workable.

The mould may of course be made in numerous ways but in order to make it cost-efficient, it is preferably made from a pre-made cell structure, where the conduit(s) is/are arranged in drilled, cut or milled passages. When using a tubing with a diameter, which is slightly larger than the passage in the cell structure, the tubing will be clamped between the cell walls, thereby keeping it in place during handling of the mould.

The tubing is preferably made from metal pipes, which has good thermal conductivity and tolerates high temperatures as well as large thermal gradients. Preferred examples are aluminium or steel pipes, but other materials such as polymers, ceramics, glass or composites may also be used.

A fluid used for cooling the mould may be any fluid, which does not react with the mould materials in an adverse manner, but to avoid the need for cleaning of the cell structure and to ease the introduction of the fluid, it is preferred to use a gas. Often it will be possible to simply use ambient air, but when a rapid cooling is needed, other gasses such as nitrogen may be employed. Similar considerations apply to any heating fluid used.

As moulds of the current type are often used for vacuum forming it is also preferred to provide the mould with one or more vacuum valves and a vacuum source connector.

The invention will now be explained in detail by reference to preferred embodiments of the invention and to the drawing, where:
Fig. 1 is a perspective view of a section of a mould according to the invention seen from below,
Fig. 2 is a side view of the mould section shown in Fig. 1,
Fig. 3 is an end view of the mould section shown in Fig. 1,
Fig. 4 shows the mould section in Fig. 1 seen directly from below,
Fig. 5 shows a mould according to the invention for the forming of wind turbine rotor blades, seen from above, and
Fig. 6 shows a cross sectional view of a mould during the assembly of a rotor blade for a wind turbine.

The preferred overall structure of the mould according to the invention includes a core member 1 sandwiched between two outer shells 2, 3, the outer surface 21 of the upper shell 2 serving as the active mould surface. Heating wires 4 are arranged in tubing 5 embedded in the core member. These reference numbers are used in all figures of the drawing.

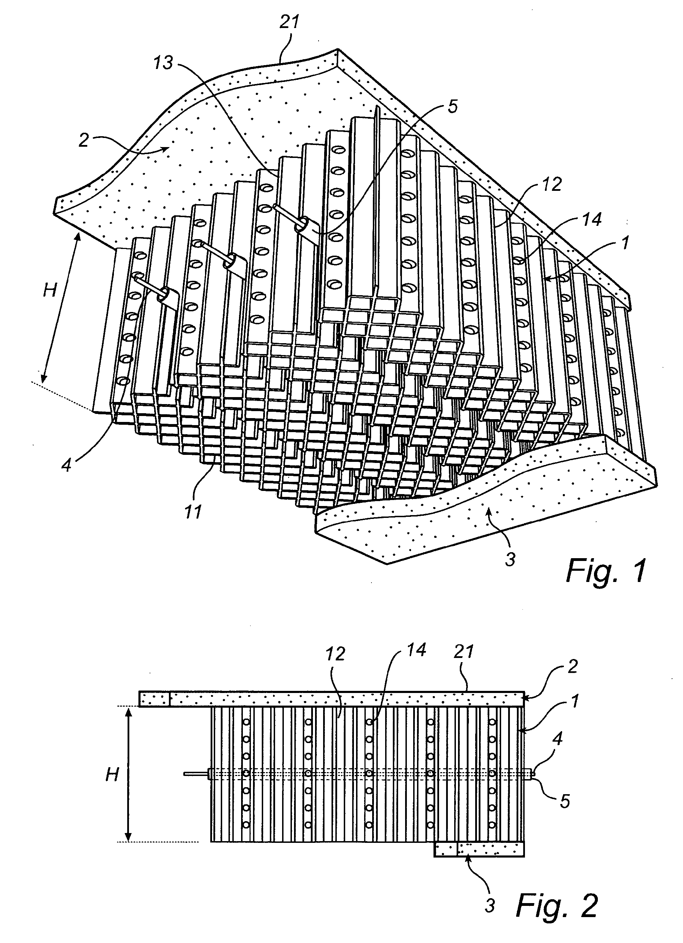

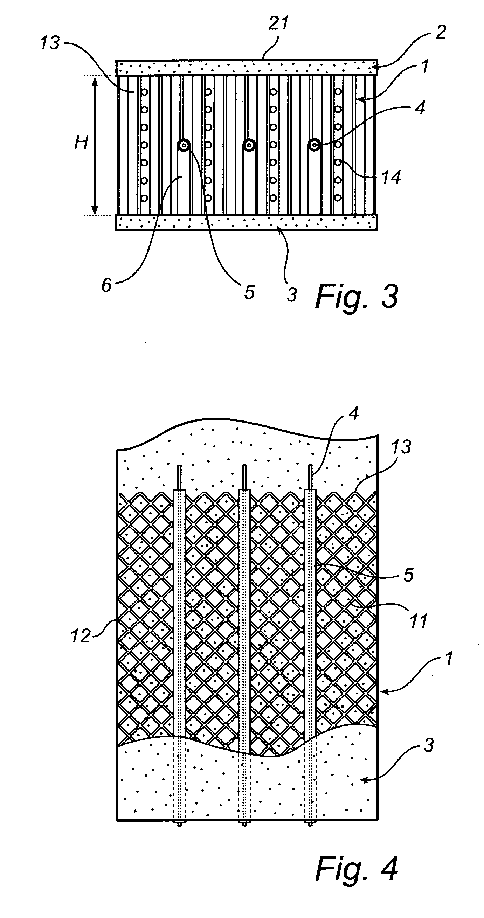

In Figs. 1 and 4 the core member 1 has been shown with a gridlike pattern on the surface 11 facing the lower shell 3, this pattern being intended to illustrate the division into cells. Likewise, the side surfaces 12, 13 of the core member 1, seen in Figs. 1, 2 and 3, are shown with vertical lines intended to illustrate the course of the cell walls. I.e. in the preferred embodiment, the cells of the core member extend across the entire height of the core member, being upwards and downwards open. But, as will be explained below, other cell structures may also be used.

At least some of the cell walls are provided with openings 14, as may be seen in Figs. 1-3. These openings are intended to allow a fluid, such as a coolant, to pass from one cell to another. Here, the openings are visible only on the cell walls exposed at the side and end surfaces 12, 13, but it is to be understood that similar openings are present in at least some of the cell walls within the structure. It is preferred, that all cells have openings towards at least one of its neighbouring cells, and even more preferred that all cell walls have such openings. Here, however, openings have been illustrated only on every third cell wall.

When using a cell structure with plate like walls, the openings 14 in the cell walls may be simple perforations (as shown on the drawing), slits or the like, but in other cell structures the openings may occur naturally. Examples of such structures could be lattices or open-celled metal foams. Regardless of the nature of the openings, the total opening area should be large enough to allow an efficient fluid flow, but at the same time the cells structure must maintain its load bearing capacity and be able to serve as a thermal conductor.

As will appear from the above, the core member 1 should fulfil three demands: 1) It must be sufficiently strong and stiff to carry the weight of the composite to be formed and to allow the mould to be handled without being deformed, 2) It should preferably allow a fluid to pass through the structure relatively freely, and 3) It should preferably contribute to the distribution of heat.

In praxis it has been found that a so-called honeycomb of aluminium fulfils these requirements, while at the same time being lightweight, resistant to chemical influences and not too expensive. Using this material for the core member therefore provides an easy to handle, durable and cost efficient mould.

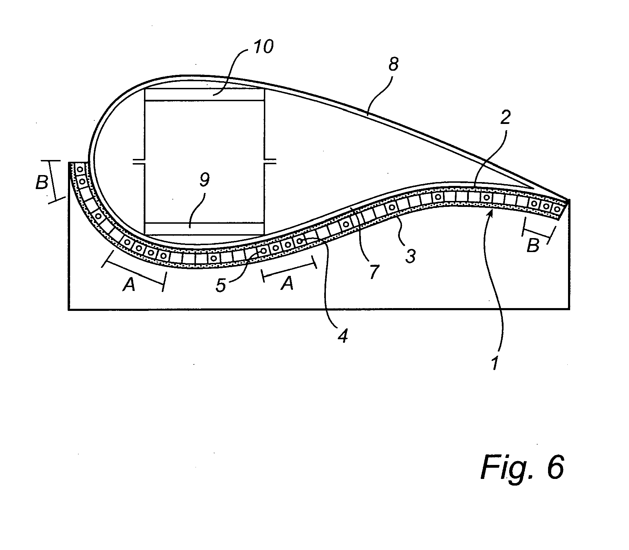

To allow the formation of a curved mould as the one shown in Fig. 6, it has proven advantageous to use an overstretched honeycomb structure, which has deliberately been deformed so that the cross-sectional shape of the cells has become elongate.

Honeycomb structures of this kind, which are also used as core members in composites, usually have cells extending over the entire height H of the structure as illustrated in Figs. 1-3. This means that heating and/or cooling fluids may circulate relatively freely and the continuous cell walls have good thermal conduction properties. It is, however, to be understood that cell structures, including honeycomb structures, having more than one layer of cells seen in the height direction of the core member may also be employed.

The outer surface 21 of the upper shell 2 serves as the active mould surface, which comes into contact with the composite to be formed (not shown). It therefore has to be made from a material, which is both resistant to heat and to contact with the composite and which can be separated from the composite upon forming. In addition, the material of the upper shell 2 must allow an efficient transfer of heat from the core member 1 to the composite as will be explained later, and it should be formable to allow formation of curved moulds as the one shown in Fig. 6. Fibre glass has proven to be well suited for the purpose, but other materials such as metals, polymers, ceramics or even glass may also be used and the shell 2 may be surface coated or layered.

In the embodiment shown in Figs. 1-4, the bottom shell 3 has the purpose of adding stability to the mould, of closing the lower ends of the cells of the core member 1 and furthermore, as will be explained below, of providing symmetry to the mould. In addition, various connectors (not shown) for heating and/or cooling fluid sources, vacuum sources or power supplies as well as means of attachment (not shown) for handling and interconnecting mould parts may be provided in the bottom shell. However, as these means may be provided in other ways, an embodiment without the bottom shell 3 falls within the scope of the invention.

According to the invention, the heating wires 4 are provided in conduit(s) 5. This is to protect them, primarily from abrasion and shearing forces, which they are generally not well suited to resist. If the attempt was made to arrange the heating wires directly in the cells structure, they would come to rest on the relatively narrow cell walls and to span the gaps formed by the cell lumens, thus being unsupported over the major part of their length. This would cause tension in the wires at the unsupported sections thereof as well as shearing forces at the supports, which would eventually cause them to break. Moreover, any vibrations in the mould, which will be unavoidable during use, would cause friction between the cell walls and the wires at the points of contact and consequently a substantial wear on the wires.

The conduits 5 also allow the heating wires 4 to be pulled through the core member 1, both when initially arranging the heating wires and during subsequent replacement. For this it is preferred to use tubing as the conduit since this will ease the pulling operation, but a sleeving on the wire may also serve the purpose. It is, of course, also possible to use both tubing and sleeving in the same mould.

Tubing 5 may be made from tubes or pipes made from any suitable material such as polymers or composites, but metals such as aluminium, steel or cobber are presently preferred due to their proved durability and excellent thermal conductivity. The dimensions of the pipes or tubes should be big enough to allow the heating wires to pass unrestrictedly, but small enough to allow an optimal transmission of heat from the wire.

Likewise, a sleeving on the heating wire 4 should also allow be chosen with due regard to the transmission of heat, and could for example be made from braided metal, such as cobber, aluminium or steel.

The heating wires 4 may be made from any suitable material, but is has proven advantageous to use Konstantan®, which has a substantially constant specific electrical resistance over a wide temperature range. This means that the amount of heat generated in the heating wire may be easily controlled.

As may be seen from Figs. 2 and 3, the heating wires 4 are preferably arranged midway between the two shells 2, 3. This serves two purposes, namely to keep them at a distance from the active surface of the mould and to ensure an even heating of the mould itself.

As explained above, it is sought to achieve a uniform temperature at the active surface 21. Arranging the heating wires 4 at distance there from, contributes to a distribution of the heat emitted from each heating wire and thus allows the use of relatively few and high-capacity heating wires without risking an overheating of the areas of the active mould surface located directly above each wire.

Another and equally important advantage of arranging the heating wires 4 at the centre of the mould is that the mould itself is heated symmetrically, leading to corresponding thermal expansion in the mould material on both sides of its centre plane. This means that the distortions caused by irregular heating, which has been known to occur in prior art moulds are avoided.

In the embodiment shown in Figs. 1-4 the heating wires 4 are arranged in cut grooves 6 in the cell structure, the grooves forming downwards open passages extending down to the bottom shell 3. However, as the open passages affect the overall thermal conductivity of the core member 1 these passages should be kept as narrow as possible and preferably face away from the active mould surface 2 as shown in Figs. 1 and 3. Alternatively, the passages may be made by drilling or by forming the core member from two halves, at least one of which have been provided with grooves prior to being assembled.

When using a cut or milled groove 6 the passages may form a serpentine pattern, where the entire path of the heating wires 4 is within the outer boundary of the core member 1. If, instead, using drilled passages, they will follow a straight path and it is therefore necessary to either use a series of neighbouring lengths of heating wire, much as shown in Fig 4, or to provide a turning section (not shown) outside the outer boundary of the core member. When using a tubing, pipes or tubes may be provided in the core member only, whereas the heating wires are exposed at the turning sections outside the mould. Which is the most advantageous depends on the composite to be formed and it will of course be possible to combine passages of the different types mentioned above in one and the same mould. Also, the choice of conduit type may depend on whether straight or curved paths are to be employed.

The composites formed with moulds of the present type are usually bound by resins, which may be either thermoplastic or thermosetting. The choice of material depends among other things on the intended use of the object to be formed, typical uses being rotor blades, tower sections and nacelle components for wind turbines, body parts for vehicles such as air planes or cars, as well as tanks and containers for fluids.

Thermoplastic materials become soft and melt when heated and harden again when cooled substantially without changes to their physical or chemical properties. Examples of thermoplastic materials include nylon, polyethylene and polypropylene.

Thermosetting materials are mixtures of a resin and a hardener or catalyst, which interact in an irreversible chemical reaction under the influence of heat forming a hard product. In some cases the chemical reaction is exothermal and produces some heat itself, which may necessitate cooling or determine a particular heating pattern. Examples of thermosetting materials include phenolic resins, polyester and epoxy.

In both cases the liquid resin is caused to bind fibrous materials, such as mats of glass fibres, which may possibly be arranged in a layered configuration together with other materials, such as lightweight core members.

Depending on the materials used and the dimensions and design of the composite, it may be necessary to apply a vacuum in order to achieve a uniform distribution of the resin in the fibrous material and avoid entrapment of air. For such uses the mould could be provided with built in vacuum valves (not shown), vacuum supply conduits and a connector for a vacuum source.

As the forming process will thus be somewhat different depending on the type of resin used, the heating requirements will also be different and the mould design may therefore have to be adapted accordingly. It will, however, be possible to use one and the same mould for both types of resins as long as it is possible to control the heating as regards temperature and duration.

In the above the tubing 5 has been described as serving only as a heating wire carrier, but if dimensioned appropriately it will of course also be possible to pass a fluid through the tubing. This option, however, is less preferred as the fluid flow is likely to deteriorate the heating wire 4. Likewise, a fluid conduit might be arranged in the passages provided for the wires 4, but as the amount of fluid needed for an efficient cooling would require conduits of a relatively large diameter, this embodiment too is less preferred.

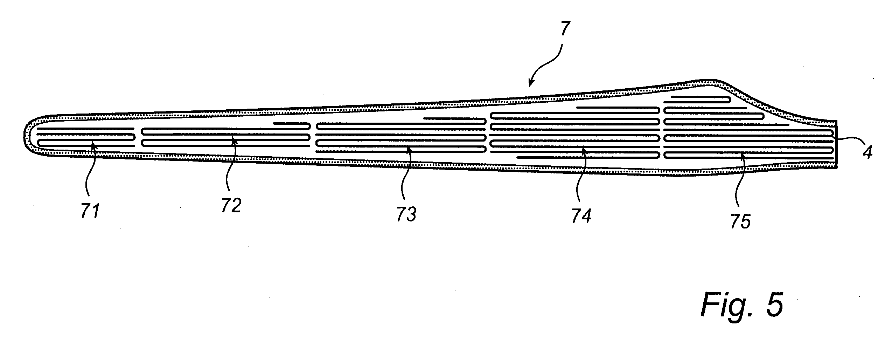

Fig. 5 shows an example of a mould 7 according to the invention for use in the manufacture of rotor blades for wind turbines. As may be seen, the mould is divided in five separate sections 71, 72, 73, 74, 75, each having a separate system of heating wires 4. This allows for a more prolonged and/or intense heating of the sections of the wing, which are exposed to the highest loads during normal operation and which therefore have the largest material thicknesses.

Moreover, large objects such as rotor blades are usually made up of a series of pre-made sections, which are joined together during a subsequent molding process, as illustrated in Fig. 6. As may be seen, the rotor blade is composed of two shells 7,8, the primary purpose of which is to the provide an aerodynamic surface shape, and a load-bearing beam assembled from two halves 9,10. In a typical process the shells and beam halves are first formed independently in different moulds of the type described herein; secondly the beam is made by interconnecting the halves; thirdly the beam is attached to the shell 8 shown on top in Fig. 6; and last the beam half 9 depicted at the bottom is attached to the lowermost shell 7, while at the same time interconnecting the edges of the shells.

The joints between the shells 7,8 and beam halves 9,10 are made by gluing, typically using a resin which require heating, and the mould is therefore provided with extra heating wires 4 in sections A,B directly beneath the points of the contact. To allow an optimal heating it should preferably be possible to energize at least some of the heating wires in these sections A,B independently of the heating wires in other sections of the mould. Also, as the material thicknesses are generally larger at joints between a beam half and a shell than at joints between two shells, the need for heating will usually be less at sections B than at sections A. In Fig. 6 the mould has been depicted as reaching just up the edge of the shell, but it is to be understood that a deeper mould may of course be employed if necessary. Likewise, it is to be understood that a mould having two halves, which enclose the composite product entirely, is of course also an option, though not likely to be practical when manufacturing large products such as rotor blades for wind turbines.

The mould itself may be assembled from a number of separate sections depending on the mode of manufacture and intended use. Such sections could be joined permanently or temporarily, but care should always be taken to ensure that such joints do not result in imperfections on the composites formed.

When using the mould according to the invention for the production of wind turbines wings as shown in Fig. 5 and using an aluminum honeycomb structure as the core member 1, the core member could be approximately 60 mm high, have a cell diameter of approximately 10 mm and a cell wall thickness of approximately 0.1 mm. An upper shell 2 made from glass fiber would then have a thickness of approximately 6 mm. Depending on the composite to be formed, heating wires 4 could be provided at intervals of 40 to 100 mm and the wires are typically manufactured in sections of 100 meters. Aluminum pipes with a diameter of 6 mm and a wall thickness of 1 mm could be used as tubing.

It is to be understood that the scope of the invention is limited only by the wording of the claims appended hereto, not by the embodiments described above. Accordingly, the features of these embodiments may be combined in other ways than those described and alternatives will be apparent to persons skilled in the art.

## Claims

1. A mould for forming fibre reinforced composites, comprising an active surface Intended to be in contact with the composite, and
a core member comprising a cell structure,
**characterized in that** it further comprises one or more conduit(s) embedded in the core member at a distance from the active surface and forming a path through the cell structure, and one or more heating wire(s) arranged in said condult(s).

2. A mould according to claim 1, where the conduit(s) comprise(s) tubing made from tubes and/or pipes.

3. A mould according to claim 1 or 2, where the cell structure is made from a material with a thermal conductivity of at least 10 W/(m·k), preferably at least 100 W/(m·K).

4. A mould according to any of the preceding claims, further comprising a fluid inlet, a fluid outlet and a fluid passage between them, the fluid passage comprising openings in at least some of the cell walls of the cell structure.

5. A mould according to any of the preceding claims, comprising two or more heating zones.

6. A mould according to claim 5, where different heating zones have different configuration of the heating wire(s) and/or separate controlling of the heating wire(s).

7. A mould according to claim 4 in combination with claim 5 or 6, where different heating zones have different supply of heating fluid.

8. A mould according to any of the preceding claims, where the conduit(s) is/are arranged at the centre of the core member, substantially half way between the active surface and the opposite surface of the mould.

9. A mould according to any of the preceding claims, where the conduit(s) is/are arranged in passages drilled, cut or milled in a pre-made cell structure.

10. A mould according to any of the preceding claims, further comprising one or more vacuum valves and a vacuum source connector.

11. A method for forming fibre reinforced composites, where materials for the formation of the composite, including a resin and a fibrous material, are laid up on an active surface of a mould, and where a core member of the mould is heated until the materials have reached their intended state, where the composite has assumed its intended shape and the fibrous material is wet through with resin, **characterized in that** the mould is heated by applying an electric current on heating wires located in one or more conduit(s) embedded in the core member at a distance from said active surface.

12. A method according to claim 11, where the resin is a thermosetting resin and where the mould is heated until the resin has hardened.

13. Use of a mould according to any of claims 1-10 for forming rotor blades for wind turbines.

14. Use of a method according to any of claims 11-12 for forming rotor blades for wind turbines.

## Patentansprüche

1. Formwerkzeug zum Herstellen faserverstärkter Verbundmaterialien, das eine aktive Fläche umfasst, die dafür vorgesehen ist, in Kontakt mit dem Verbundmaterial zu stehen, und ein Kernelement, das eine Zellenstruktur umfasst, umfasst,
**dadurch gekennzeichnet, dass** es des Weiteren einen oder mehrere Kanäle umfasst, die in das Kernelement in einer Distanz von der aktiven Fläche eingebettet sind und einen Pfad durch die Zellenstruktur bilden, sowie einen oder mehrere Heizdrähte umfasst, die in dem Kanal bzw. den Kanälen angeordnet sind.

2. Formwerkzeug nach Anspruch 1, wobei der oder die Kanäle Rohrleitungen umfassen, die aus Röhren und/oder Rohren bestehen.

3. Formwerkzeug nach Anspruch 1 oder 2, wobei die Zellenstruktur aus einem Material mit einer Wärmeleitfähigkeit von mindestens 10 W/(m·K), bevorzugt mindestens 100 W/(m·K) besteht.

4. Formwerkzeug nach einem der vorangehenden Ansprüche, das des Weiteren einen Fluideinlass, einen Fluidauslass und einen dazwischenliegenden Fluiddurchgang umfasst, wobei der Fluiddurchgang Öffnungen in mindestens einigen der Zellenwände der Zellenstruktur umfasst.

5. Formwerkzeug nach einem der vorangehenden Ansprüche, das zwei oder mehr Heizzonen umfasst.

6. Formwerkzeug nach Anspruch 5, wobei verschiedene Heizzonen eine unterschiedliche Konfiguration der Heizdrähte und/oder eine separate Steuerung der Heizdrähte haben.

7. Formwerkzeug nach Anspruch 4 in Kombination mit Anspruch 5 oder 6, wobei verschiedene Heizzonen eine unterschiedliche Versorgung mit Erwärmungsfluid haben.

8. Formwerkzeug nach einem der vorangehenden Ansprüche, wobei der oder die Kanäle in der Mitte des Kernelements, im Wesentlichen auf der Hälfte der Strecke zwischen der aktiven Fläche und der gegenüberliegenden Fläche des Formwerkzeugs, angeordnet sind.

9. Formwerkzeug nach einem der vorangehenden Ansprüche, wobei der oder die Kanäle in Durchgängen angeordnet sind, die in eine vorgefertigte Zellenstruktur gebohrt, geschnitten oder gefräst sind.

10. Formwerkzeug nach einem der vorangehenden Ansprüche, das des Weiteren ein oder mehrere Vakuumventile und einen Vakuumquellenanschluss umfasst.

11. Verfahren zum Herstellen faserverstärkter Verbundmaterialien, wobei Materialien für die Herstellung des Verbundmaterials, einschließlich eines Harzes und eines Fasermaterials, auf eine aktive Fläche eines Formwerkzeugs gelegt werden, und wobei ein Kernelement des Formwerkzeugs erwärmt wird, bis die Materialien ihren vorgesehenen Zustand erreicht haben, in dem das Verbundmaterial seine vorgesehene Form angenommen hat und das Fasermaterial mit dem Harz durchtränkt ist,
**dadurch gekennzeichnet, dass** das Formwerkzeug erwärmt wird, indem ein elektrischer Strom an Heizdrähte angelegt wird, die sich in einem oder mehreren Kanälen befinden, die in das Kernelement in einer Distanz von der aktive Fläche eingebettet sind.

12. Verfahren nach Anspruch 11, wobei das Harz ein wärmehärtendes Harz ist, und wobei das Formwerkzeug erwärmt wird, bis das Harz gehärtet ist.

13. Verwendung eines Formwerkzeugs nach einem der Ansprüche 1-10 zum Herstellen von Rotorblättern für Windkraftturbinen.

14. Verwendung eines Verfahrens nach einem der Ansprüche 11-12 zum Herstellen von Rotorblättern für Windkraftturbinen.

## Revendications

1. Moule pour former des composites renforcés par des fibres, comprenant une surface active destinée à être en contact avec le composite, et un élément de noyau comprenant une structure cellulaire, **caractérisé en ce qu'**il comprend en outre un ou plusieurs conduit(s) incorporé(s) dans l'élément de noyau à une distance de la surface active et formant un chemin à travers la structure cellulaire, et un ou plusieurs fil(s) de chauffage agencé(s) dans ledit/lesdits conduit(s).

2. Moule selon la revendication 1, dans lequel le(s) conduit(s) comprend (comprennent) un tubage constitué de tubes et/ou de tuyaux.

3. Moule selon la revendication 1 ou 2, dans lequel la structure cellulaire est constituée d'un matériau qui présente une conductivité thermique d'au moins 10 W/(m-K), de préférence d'au moins 100 W/(m-K).

4. Moule selon l'une quelconque des revendications précédentes, comprenant en outre une entrée de fluide, une sortie de fluide et un passage de fluide entre celles-ci, le passage de fluide comprenant des ouvertures dans au moins plusieurs des parois de cellule de la structure cellulaire.

5. Moule selon l'une quelconque des revendications précédentes, comprenant deux zones de chauffage, ou plus.

6. Moule selon la revendication 5, dans lequel différentes zones de chauffage présentent une configuration différente du/des fil(s) de chauffage et/ou une commande séparée du/des fil(s) de chauffage.

7. Moule selon la revendication 4 en combinaison avec la revendication 5 ou 6, dans lequel différentes zones de chauffage présentent une alimentation de fluide de chauffage différente.

8. Moule selon l'une quelconque des revendications précédentes, dans lequel le(s) conduit(s) est (sont) agencé(s) au centre de l'élément de noyau, sensiblement à mi-chemin entre la surface active et la surface opposée du moule.

9. Moule selon l'une quelconque des revendications précédentes, dans lequel le(s) conduit(s) est (sont) agencé(s) dans des passages percés, coupés ou fraisés dans une structure cellulaire préfabriquée.

10. Moule selon l'une quelconque des revendications précédentes, comprenant en outre une ou plusieurs soupape(s) de dépression et un connecteur de source de vide.

11. Procédé pour former des composites renforcés par des fibres, dans lequel des matériaux pour fabriquer le composite, comprenant une résine et une matière fibreuse, sont déposés sur une surface active d'un moule, et dans lequel un élément de noyau du moule est chauffé jusqu'à ce que les matériaux aient atteint leur état visé, dans lequel le composite a adopté sa forme visée et la matière fibreuse est imprégnée par la résine, **caractérisé en ce que** le moule est chauffé en appliquant un courant électrique à des fils de chauffage qui sont situés dans un ou plusieurs conduit(s) incorporé (s) dans l'élément de noyau à une distance de ladite surface active.

12. Procédé selon la revendication 11, dans lequel la résine est une résine thermodurcissable, et dans lequel le moule est chauffé jusqu'à ce que la résine ait durci.

13. Utilisation d'un moule selon l'une quelconque des revendications 1 à 10 pour former des pales de rotor pour des éoliennes.

14. Utilisation d'un procédé selon l'une quelconque des revendications 11 ou 12 pour former des pales de rotor pour des éoliennes.
